# EUROPEAN PATENT SPECIFICATION

(11) **EP 1 871 040 B1**
(45) Date of publication and mention of the grant of the patent: **30.09.2009**
(21) Application number: 06742163.6
(22) Date of filing: 13.06.2006
(51) Int. Cl.: H04L 12/28, H04L 12/40

(54) **MANAGEMENT SYSTEM AND METHOD BASED ON INTELLIGENT PLATFORM MANAGEMENT INTERFACE**
AUF INTELLIGENTER PLATTFORMVERWALTUNGSSCHNITTSTELLE BASIERENDES VERWALTUNGSSYSTEM UND VERFAHREN
MÉTHODE ET SYSTÈME DE GESTION REPOSANT SUR UNE INTERFACE INTELLIGENTE DE GESTION DE PLATE-FORME

(30) Priority: 14.10.2005 CN 200510112920
(43) Date of publication of application: 26.12.2007
(73) Proprietor: Huawei Technologies Co., Ltd., Longgang District, Shenzhen Guangdong 518129 (CN)
(72) Inventor: ZHANG, Junjie Huawei Administration Building, Shenzhen, Guangdong 518129 (CN); HUO, Hongwei Huawei Administration Building, Shenzhen, Guangdong 518129 (CN); FANG, Qingyin Huawei Administration Building, Shenzhen, Guangdong 518129 (CN); ZHANG, Dongyan Huawei Administration Building, Shenzhen, Guangdong 518129 (CN)
(74) Representative: Collin, Jérôme
(86) International application number: PCT/CN2006/001303
(87) International publication number: WO 2007/041909

(56) References cited:
- CN-A- 1 272 992
- CN-A- 1 422 041
- US-A1- 2003 130 969
- US-A1- 2003 152 074
- J. E. HUGHES E.A.: "BladeCenter processor blades, I/O expansion adapters, and units" IBM J. RES. & DEV., [Online] 7 October 2005 (2005-10-07), pages 837-859, XP002476167 Retrieved from the Internet: URL:http://www.research.ibm.com/journal/rd /496/hughes.pdf> [retrieved on 2008-04-11]
- JEAN MARC IRAZABAL, STEVE BLOZIS: "I2C Bus Overview" DESIGNCON 2003 TECFORUM, [Online] 27 January 2003 (2003-01-27), pages 1-158, XP002476168 Retrieved from the Internet: URL:http://www.nxp.com/acrobat_download/va rious/design_con_2003_tecforum_i2c_bus_ove rview.pdf> [retrieved on 2008-04-11]
- PCI INDUSTRIAL COMPUTERS MANUFACTURERS GROUP (PICMG): "AdvancedTCA, PICMG 3.0 Short Form Specification" INTERNET CITATION, [Online] 31 January 2003 (2003-01-31), XP002377541 Retrieved from the Internet: URL:http://www.picmgeu.org/specs/shortform %20specs/PICMG_3_0_shortform.pdf> [retrieved on 2006-04-20]
- KAISER J ET AL: "Implementing real-time event channels on CAN-bus" FACTORY COMMUNICATION SYSTEMS, 2004. PROCEEDINGS. 2004 IEEE INTERNATIONAL WORKSHOP ON VIENNA, AUSTRIA SEPT. 22-24, 2004, PISCATAWAY, NJ, USA,IEEE, 22 September 2004 (2004-09-22), pages 247-256, XP010756409 ISBN: 0-7803-8734-1
- ANONYMOUS: "IPMI - Intelligent Platform Management Interface Specification passage" IPMI. INTELLIGENT PLATFORM MANAGEMENT INTERFACE SPECIFICATION, XX, XX, no. version 15, 20 February 2002 (2002-02-20), XP002346263

## Description

### Field of the Invention

The present invention relates generally to telecommunication technology, and, more particularly, to management system and method based on an Intelligent Platform Management Interface (IPMI).

### Background of the Invention

IPMI originates from the field of servers, intending to provide servers with such functions as device management, sensor/event management, user management, fan subrack/power subrack management, and remote maintenance.

In September of 1998, Intel, HP, NEC and Dell jointly released the IPMI V1.0 Standards. By March of 2003, as many as 142 vendors had adopted the IPMI Standards. In 2004, the IPMI V2.0 Standards were released. The PCI Industrial Computer Manufacturers Group (PICMG) has defined the IPMI Standards as the device management standards for Advanced Telecommunications Computing Architecture (ATCA), further promoting the application of the IPMI Standards in the management of telecommunication devices.

IPMI features excellent standardization, separation of management channels from service channels, abundant command sets, and high security and so on.

The feature of standardization makes the IPMI an open standard hardware platform interface, makes the IPMI with high reliability, scalability, and portability, and helps reduce the development period and cost of the IPMI.

The separation of management channels from service channels offers the IPMI High Availability (HA), and makes the IPMI subsystem independent of the power supply system and the Service Management System (SMS). With OS-absent functionality, the IPMI is operable even when the service system is faulty. Besides, the IPMI defines the LAN/Serial/Modem ports based outband maintenance channels.

Originating from the field of servers, the IPMI inherits partial definitions of the Alert Standard Forum (ASF) Standards. The IPMI V1.5 includes seven types of commands, totally 166 commands, and more than 200 sensors/events.

The outband LAN/Modem/Serial channels of IPMI support user/password/authority management, and multi-user login, providing the IPMI with high security.

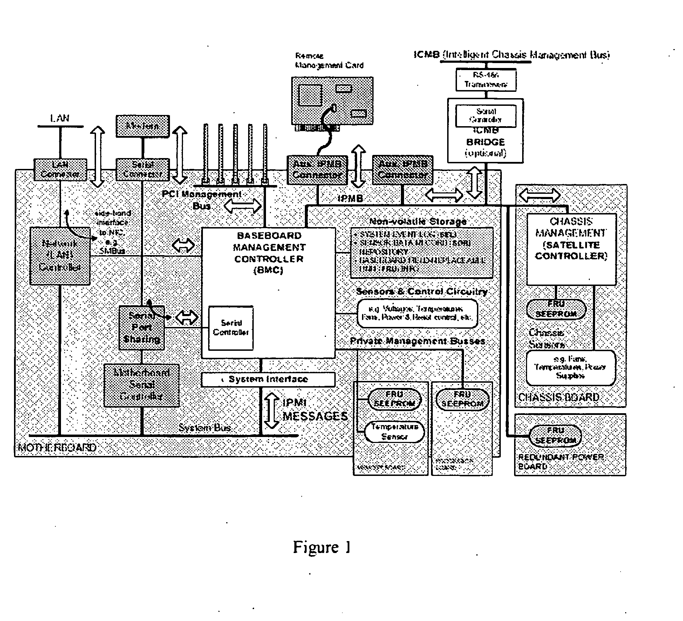

Figure 1 shows a typical application of the IPMI. As shown in Figure 1, the Baseboard Management Controller (BMC) is the core of the IPMI. Configured between the system bus and the platform management hardware. The BMC provides interfaces for connecting to the system bus and the platform management hardware. Through Intelligent Platform Management Bus (IPMB), the IPMI supports the expansion of the platform management system, and the communication between the BMC and the System Management Controller (SMC). The IPMB is a serial bus designed on the basis of I²C (the bus for interconnecting integrated circuits). The IPMB may work in two modes: standard mode and fast mode. When working in standard mode, the IPMB bus supports a maximum bit rate of 100 Kbps. When working in fast mode, the IPMB supports a maximum bit rate of 400 Kbps.

In practical applications, a master and a slave Chassis Management Module (CMM) boards are used to control the chassis. Other boards communicate with the CMM through respective BMCs. The BMC connects to the CMM through the IPMB bus.

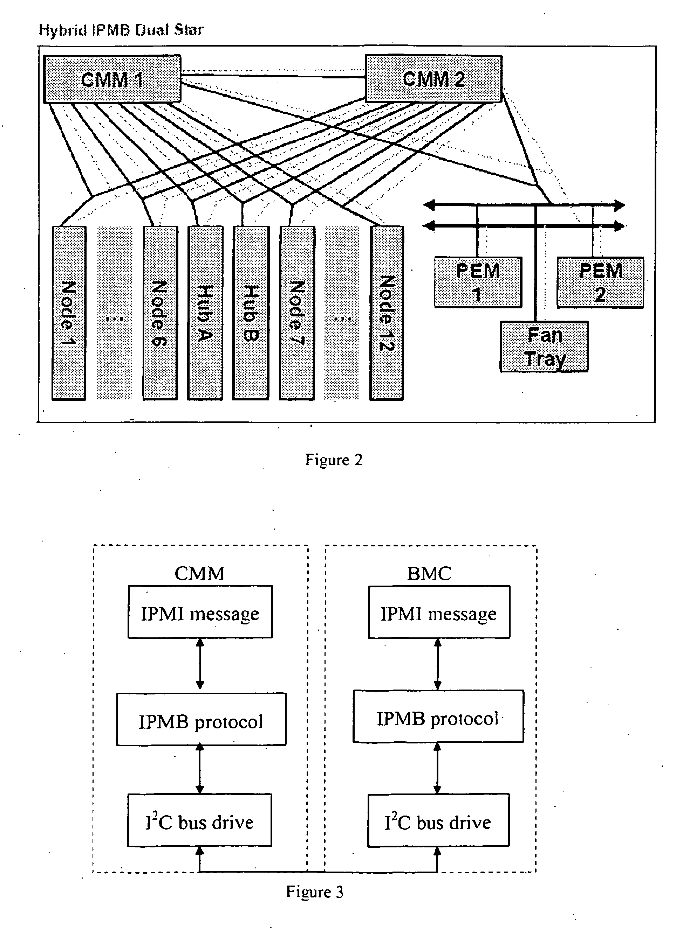

The IPMB buses connecting the BMC and the CMM may adopt either dual-star topology or bus topology. Due to the limitations on driving power, speed and hot-swapping capability, the IPMB buses generally adopts dual-star topology, as shown in Figure 2.

In Figure 2, the CMM1 and CMM2 respectively connect to each BMC through two IPMB buses to perform mutual backup and load sharing between them. One CMM is the active board, and the other CMM is the standby board.

When dual-star topology is adopted, the communication process between the active CMM and the BMC is as shown in Figure3. In Figure 3, when the active CMM needs to communicate with the BMC in a designated node board, the active CMM encapsulates IPMI messages into IPMI frames, and then sends the IPMI frames over the IPMB bus to the BMC of the designated node. The BMC of the designated node first identifies the node ID. If the messages are destined for the designated node, the designated node receives the IPMI frames, obtains the IPMI messages, and sends the IPMI messages to the upper layer software module.

In analysis the conventional scheme, the inventor found: When the CMM connects to the BMC through IPMB buses in dual-star topology, the number of signals transmitting from the CMM to the backplane is quite large; for example, each BMC node may have four signals connecting to the backplane. The number of signals increases with the number of BMC nodes, and the signals occupy the pins of connectors between the CMM and the backplane, making the wiring design of the backplane hardware complicated. When the number of BMC nodes in the extended management system increases, it may be necessary to increase the number of IPMB buses connecting to the CMM, and modify the designs of the backplane and the CMM accordingly, making the expansion of BMC nodes inconvenient.

When the CMM connects to the BMC through IPMB buses in dual-star topology, it may be necessary to equip the CMM with an IPMB controller that connects to many IPMB buses, twice as many as the number of IPMB buses in BMC nodes. The IPMB controller is generally implemented through Field Programmable Gate Array (FPGA) logics. As a result, the hardware of the IPMB controller may be costly. The IPMB bus performs error detection and correction functions through its software rather than its hardware, increasing the software cost of the management system.

When the CMM connects to the BMC through IPMB buses in bus topology, the number of BMC nodes supported by the management system is subject to limitations. This is because an I²C bus is adopted in the physical layer, and the driving power of the I²C bus is limited. For example, the I²C bus generally requires that the load capacitance on the bus does not exceed 400 pf. The bandwidth of the IPMB bus is either 100 Kbps or 400 Kbps. Generally, the bandwidth is 100 Kbps. When the bandwidth of 100 Kbps is shared among many BMC nodes, the data transmission efficiency of the management system is very low. In addition, because the IPMB bus is based on an I²C bus, while the I²C bus is based on TTL/CMOS level, the management information, especially the clock signals, of the management system is susceptible to interference during transmission.

In the paper of J. E. HUGHES E. A.: "BladeCenter processor blades, I/O expansion adapters, and units" IBM J. RES. & DEV., 7 October 2005 (2005-10-07), pages 837-859, XP002476167, available from the Internet: URL: http://www.research.ibm.com/journal/rd /496/hughes.pdf, there is disclosed a solution in which the BMC interfaces with the CMM via the RS-485 bus.
In the paper of JEAN MARC IRAZABAL, STEVE BLOZIS: "I2C Bus Overview" DESIGNCON 2003 TECFORUM, 27 January 2003 (2003-01-27), pages 1-158, XP002476168, available from the Internet: URL: htto://www.nxp.com/acrobat download/va rious/design con 2003 tecforum i2c bus overview.pdf, there is introduced the bus characteristics of the Controller Area Network (CAN) bus.

### Summary of the Invention

The object of the present invention is to provide a system and method for managing baseboard management controller, utilizing a differential bus and via a bus connection-mode, to overcome the problem of difficult development and high cost in the prior art.

Some embodiments of the present invention disclose a system for managing a baseboard management controller BMC, comprising: at least one BMC; and at least one primary node board, connected to said at least one BMC via a bus characterized by that, said bus is a Controller Area Network, CAN, bus, and said at least one BMC and said at least one primary node board are connected to said CAN bus in bus topology, respectively.

Said at least one BMC comprises a CAN frame encapsulator and a CAN frame decapsulator; said at least one primary node board comprises a CAN frame encapsulator and a CAN frame decapsulator.

The system comprises at least one CAN bus ; each CAN bus connected to said at least one BMC and the at least one primary node board

Some embodiments of the present invention disclose a method for managing a baseboard management controller, BMC, comprising: transmitting an Intelligent Platform Management Interface, IPMI, message via a Controller Area Network, CAN, bus between a BMC and a primary node board, wherein the BMC and the primary node board are connected with each other in bus topology; and managing the BMC based on the IPMI message.

The process of transmitting comprises: encapsulating the IPMI message into an IPMI frame, encapsulating the IPMI frame into a CAN frame, and transmitting the CAN frame over the CAN bus; checking the destination node information in the CAN frame, and determining whether to receive the CAN frame; and receiving the CAN frame if it is determined that the CAN frame is to be received.

Alternatively, the process of transmitting comprises: determining a transmitting CAN bus from a plurality of CAN buses: encapsulating the IPMI message into an IPMI frame, encapsulating the IPMI frame into a CAN frame, and transmitting the CAN frame over the transmitting CAN bus; checking the destination node information in the CAN frame, and checking the CAN frame, and determining whether to receive the CAN frame; and receiving the CAN frame if it is determined that the CAN frame is to be received.

The process of determining a transmitting CAN bus from a plurality of CAN bus comprises: determining a master CAN bus in normal state as the transmitting CAN bus; or determining a standby CAN bus in normal state as the transmitting CAN bus if the master CAN bus is abnormal.
The process of managing comprises: decapsulating the received CAN frame into an IPMI frame; extracting the IPMI message from the IPMI frame; and managing the BMC via the IPMI message.

According to the above description, some features according to some embodiments of the present invention can be summarized as follows:
1) Adopting differential buses like CAN buses, some embodiments of the present invention can utilize the advantages of differential buses, such as strong anti-interference capability. Providing the hardware with abundant error detection or correction functions, some embodiments of the present invention can automatically shut down any node in case of serious errors occur. Providing high bandwidth, thus some embodiments of the present invention can enhance the reliability of management information transmission and simplify the complexity of the software and hardware design of the system. 2) Adopting bus topology for the IPMI based management system, some embodiments of the present invention can avoid the process of designing an IPMB controller. The number of signal cables on the backplane and the primary node board are only twice the number of CAN buses. For example, if there are two CAN buses, only four signal cables are needed on the backplane and primary node board. Some embodiments of the present invention further simplifie the hardware design of the management system. Supports adding BMC nodes to the CAN bus of the backplane directly, without changing the hardware of the primary node board. Some embodiments of the present invention can adopt multiple CAN buses that work in mutual backup or load sharing mode, realizing reliable and high-speed transmission of management information. Thus some embodiments of the present invention can serve the purpose of high management system reliability, reduced system cost, and excellent system scalability.

### Brief Description of the Drawings

Figure 1 illustrates a conventional application of the IPMI.

Figure 2 illustrates the dual star topology of the CMM and the BMC in prior art.

Figure 3 illustrates a conventional method for transmitting management information of the CMM and the BMC.

Figure 4 illustrates the bus topology of the CMM and the BMC according to an embodiment of the present invention.

Figure 5 shows a flowchart of transmitting management information of the CMM and the BMC according to an embodiment of the present invention.

### Detailed Description of the Embodiments

In some embodiments of the present invention, the bus topology is adopted to connect at least one BMC to at least one primary node board through a differential bus, and the IPMI based management information is transmitted over the differential bus between the BMC and the primary node board for managing the BMC.

The management system and method based on IPMI according to some embodiments of the present invention are described hereinafter with reference to accompanying drawings.

In an embodiment, a differential bus and a bus topology are adopted for the management system based on IPMI. In other words, the primary node boards and the BMCs in the management system based on IPMI are connected in bus topology through a differential bus. The differential bus may be a CAN bus. The primary node boards in the embodiment refer to the boards managing the BMC nodes, such as CMM, System Management Module (SMM) and Main Processing Unit (MPU) of the IPMI system.

Due to the anti-interference feature of the differential CAN bus, the management information of the management system according to some embodiments of the present invention can be transmitted reliably, and clock signals are no longer subject to severe interference arising from IPMB bus. The CAN bus provides the error detection or error correction function through hardware, while the IPMB bus realizes error detection or error correction through software rather than hardware. Therefore, some embodiments of the present invention may greatly simplify the software design of the management system, and reduce the cost of software design.

The CAN bus supports switching off a node automatically in case of the node has a serious error. Therefore, when a node in the management system is faulty, the fault does not affect other nodes connecting to the CAN bus according to some embodiment of the present invention, making the management system error tolerable.

In some embodiments of the invention, the management system may include one differential bus or multiple differential buses. When there are multiple differential buses, the multiple differential buses may work in mutual backup or load sharing mode, increasing the bandwidth for signal transmission and improving the signal transmission efficiency.

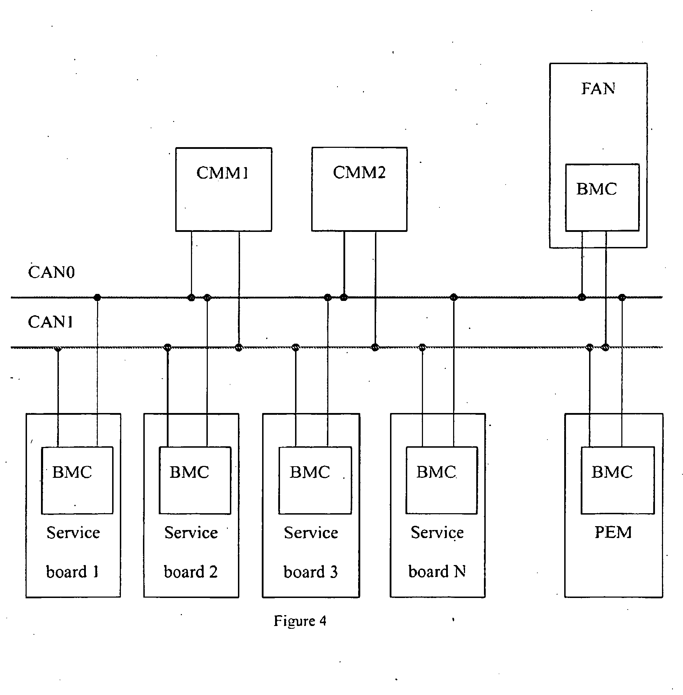

When there are two differential CAN buses and the primary node board is CMM, the management system according to an embodiment of the present invention may adopt the hardware topology shown in Figure 4. In Figure 4, the management system includes two CMM boards, i.e. CMM1 and CMM2, multiple BMC nodes, and two CAN buses, CAN0 and CAN1.

The CMM1, CMM2, and BMC connect to the CAN0 and CAN1 buses respectively through the IPMI interfaces.

In the management system according to an embodiment, the IPMB bus in the physical layer is replaced by a CAN bus. The IPMB bus supports two modes: standard mode and fast mode. When working in standard mode, the IPMB bus supports a maximum bit rate of 100 Kbps. When working in fast mode, the IPMB supports a maximum bit rate of 400 Kbps. The CAN bus may provide a bandwidth of up to 1 Mbps. When CAN0 and CAN1 buses work in load sharing mode, the two CAN buses may provide a bandwidth of up to 2 Mbps. The CMM nodes and BMC nodes connecting to CAN0 and CAN1 share the bandwidth of 2 Mbps, effectively increasing the bandwidth for signal transmission on each node. If no burst traffic occurs on a node, theoretically, the CMM nodes and BMC nodes may transmit data at a bit rate of up to 2 Mbps.

The hardware of the management system according to one embodiment of the present invention adopts a bus topology, as shown in Figure 4. As a result, two CAN buses are enough on connecting the backplane and the CMM. With either CAN bus including two differential signals, there are only four signals on the backplane and the CMM respectively. In other words, the number of signals on the backplane and the CMM are twice the number of CAN buses. When it is necessary to add a new BMC node to the management system, the new BMC node may be added directly to the CAN bus, and the number of CAN buses on the CMM does not increase with the number of BMC nodes. This mechanism makes the management system scalable, simplifies the hardware design of the backplane and the CMM, and reduces the hardware cost.

With the CAN bus, the management system according to one embodiment of the present invention can function normally without equipping the CMM with an IPMB controller, further reducing the hardware cost.

When the management system transmits CAN frames carrying management information over CAN bus between CMM1, CMM2, and each BMC, it uses a CAN frame encapsulate module and a CAN frame decapsulator to process the CAN frames according to one embodiment of the present invention.

The CAN frame encapsulator and the CAN frame decapsulator may be incorporated into each node of the management system. That is, the number of CAN frame encapsulators is the same as that of CAN frame decapsulators and that of nodes in the management system. Each node includes a CAN frame encapsulator and a CAN frame decapsulator.

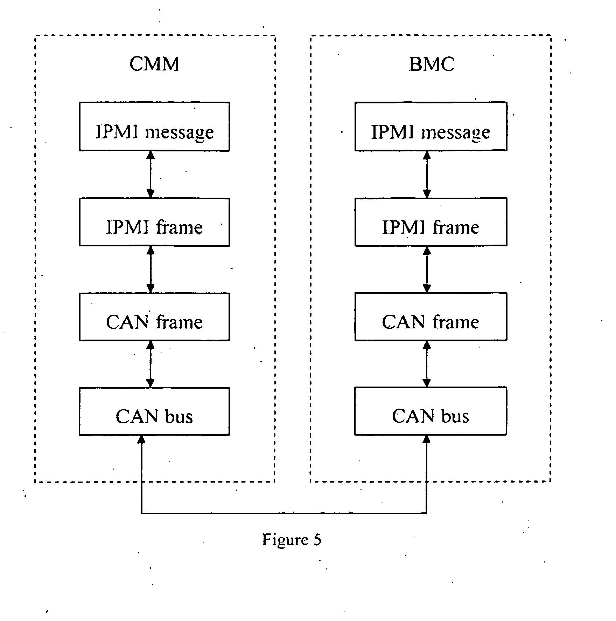

The transmission process of management information in the management system according to some embodiments of the present invention is described hereinafter with reference to Figure 5.

As shown in Figure 5, when a primary node board, such as CMM, needs to send an IPMI message to a BMC node, the IPMI encapsulator on the CMM encapsulates the IPMI message into an IPMI frame, the CAN frame encapsulator on the CMM encapsulates the IPMI frame into a CAN frame, and then transmits the CAN frame over the CAN bus. Each BMC node connecting to the CAN bus checks the destination node ID contained in the CAN frame. If the destination node ID is different from its own node ID, the BMC node does not receive the CAN frame. If the destination node ID is the same as its own node ID, the BMC node receives the CAN frame, decapsulates the CAN frame into an IPMI frame, and submits the IPMI frame to the upper layer IPMI decapsulor for extracting the IPMI message.

When a BMC node needs to send an IPMI message to a CMM, the IPMI encapsulator on the BMC node encapsulates the IPMI message into an IPMI frame, the CAN frame encapsulator on the BMC node encapsulates the IPMI frame into a CAN frame, and then transmits the CAN frame over the CAN bus. Each node connecting to the CAN bus checks the destination node ID contained in the CAN frame. If the destination node ID is different from its own node ID, the node does not receive the CAN frame; if the destination node ID is the same as its own node ID, the node receives the CAN frame, decapsulates the CAN frame into an IPMI frame, and submits the IPMI frame to the upper layer IPMI decapsulator for extracting the IPMI message.

In the transmission process of management information, if there are multiple CAN buses working in mutual backup mode, the CMM or BMC transmits the CAN frame over the master CAN bus in the normal state, or over a standby CAN bus working in the normal state when the active CAN bus is faulty. For example, if there are two CAN buses working in mutual backup mode, and one of the CAN buses is faulty, the CMM or BMC automatically transmits all CAN frames over the normal CAN bus. This mechanism improves the reliability of transmission of IMPI management information in the management system, and the reliability of the management system. If there are multiple CAN buses working in load sharing mode, the CMM or BMC transmits the CAN frame over a CAN bus according to the predefined scheduling rule. For example, the CMM may transmit CAN frames over various CAN buses according to the predefined scheduling rule, ensuring load balancing among the CAN buses. This mechanism guarantees the bandwidth for each node on the CAN bus and the transmission speed of IPMI management information.

Through above transmission process, the CMM may transmit the IPMI management information to a destination BMC node, so that the destination BMC node can perform relevant operations according to the IPMI management information. Meanwhile, the BMC node may send its response message to the CMM, allowing the CMM to manage the BMC node effectively.

Although the present invention has been described through several embodiments, a myriad of changes, variations, alterations, transformations, and modifications may be suggested to one skilled in the field, and it is intended that the present invention comprise such changes, variations, alterations, transformations, and modifications as fall within the scope of the appended claims.

## Claims

1. A system for managing a baseboard management controller, BMC, comprising:
at least one BMC; and
at least one primary node board, connected to said at least one BMC via a bus; **characterized by** that,
said bus is a Controller Area Network, CAN, bus, and said at least one BMC and said at least one primary node board are connected to said CAN bus in bus topology, respectively.

2. The system of claim 1, wherein said at least one BMC comprises a CAN frame encapsulator and a CAN frame decapsulator;
said at least one primary node board comprises a CAN frame encapsulator and a CAN frame decapsulator.

3. The system of claim 1 or 2, further comprising at least one CAN bus;
each CAN bus connected to said at least one BMC and the at least one primary node board.

4. A method for managing a baseboard management controller, BMC, comprising:
transmitting an Intelligent Platform Management Interface, IPMI, message via a Controller Area Network, CAN, bus between a BMC and a primary node board, wherein the BMC and the primary node board are connected with each other in bus topology; and
managing the BMC based on the IPMI message.

5. The method of claim 4, the process of transmitting comprising:
encapsulating the IPMI message into an IPMI frame, encapsulating the IPMI frame into a CAN frame, and transmitting the CAN frame over the CAN bus;
checking the destination node information in the CAN frame, and determining whether to receive the CAN frame, and
receiving the CAN frame if it is determined that the CAN frame is to be received.

6. The method of claim 4, the process of transmitting comprising:
determining a transmitting CAN bus from a plurality of CAN buses;
encapsulating the IPMI message into an IPMI frame, encapsulating the IPMI frame into a CAN frame, and transmitting the CAN frame over the transmitting CAN bus;
checking the destination node information in the CAN frame, and checking the CAN frame, and determining whether to receive the CAN frame; and
receiving the CAN frame if it is determined that the CAN frame is to be received.

7. The method of claim 6, the process of determining a transmitting CAN bus from a plurality of CAN buses comprising:
determining a master CAN bus in normal state as the transmitting CAN bus; or
determining a standby CAN bus in normal state as the transmitting CAN bus if the master CAN bus is abnormal.

8. The method of claim 4, the process of managing comprises:
decapsulating the received CAN frame into an IPMI frame;
extracting the IPMI message from the IPMI frame; and
managing the BMC via the IPMI message.

## Patentansprüche

1. System zum Verwalten eines Baseboard-Management-Controllers, BMC, umfassend:
mindestens einen BMC; und
mindestens eine Haupt-Knoten-Platine, die mit dem mindestens einen BMC über einen Bus verbunden ist;
**dadurch gekennzeichnet, dass**
der Bus ein Controller Area Network, CAN, - Bus ist und der mindestens eine BMC und die mindestens eine Haupt-Knoten-Platine mit dem CAN-Bus in Bus-Topologie verbunden sind.

2. System nach Anspruch 1, wobei der mindestens eine BMC einen CAN-Rahmen-Verkapseler und einen CAN-Rahmen-Entkapseler enthält;
die mindestens eine Haupt-Knoten-Platine einen CAN-Rahmen-Verkapseler und einen CAN-Rahmen-Entkapseler enthält.

3. System nach Anspruch 1 oder 2, das ferner mindestens einen CAN-Bus enthält;
wobei jeder CAN-Bus mit dem mindestens einen BMC und der mindestens einen Haupt-Knoten-Platine verbunden ist.

4. Verfahren zum Verwalten eines Baseboard-Management-Controllers, BMC, umfassend:
Senden einer Nachricht einer Intelligent Platform Management Interface, IPMI, über einen Controller Area Network, CAN, - Bus zwischen einem BMC und einer Haupt-Knoten-Platine, wobei der BMC und die Haupt-Knoten-Platine miteinander in Bus-Topologie verbunden sind; und
Verwalten des BMC auf der Basis der IPMI-Nachricht.

5. Verfahren nach Anspruch 4, wobei der Prozess des Sendens umfasst:
Verkapseln der IPMI-Nachricht in einen IPMI-Rahmen, Verkapseln des IPMI-Rahmens in einen CAN-Rahmen, und Senden des CAN-Rahmens über den CAN-Bus;
Überprüfen der Zielknoten-Information im CAN-Rahmen und Feststellen, ob der CAN-Rahmen zu empfangen ist, und
Empfangen des CAN-Rahmens, falls festgestellt wird, dass der CAN-Rahmen zu empfangen ist.

6. Verfahren nach Anspruch 4, wobei der Prozess des Sendens umfasst:
Bestimmen eines sendenden CAN-Busses aus einer Vielzahl von CAN-Bussen;
Verkapseln der IPMI-Nachricht in einen IPMI-Rahmen, Verkapseln des IPMI-Rahmens in einen CAN-Rahmen, und Senden des CAN-Rahmens über den sendenden CAN-Bus;
Überprüfen der Zielknoten-Information im CAN-Rahmen und Überprüfen des CAN-Rahmens und Feststellen, ob der CAN-Rahmen zu empfangen ist, und
Empfangen des CAN-Rahmens, falls festgestellt wird, dass der CAN-Rahmen zu empfangen ist.

7. Verfahren nach Anspruch 6, wobei der Prozess des Bestimmens eines sendenden CAN-Busses aus einer Vielzahl von CAN-Bussen umfasst:
Bestimmen eines Haupt-CAN-Busses im Normalzustand als den sendenden CAN-Bus; oder
Bestimmen eines Standby-CAN-Busses im Normalzustand als den sendenden CAN-Bus; wenn der Haupt-CAN-Bus nicht normal ist.

8. Verfahren nach Anspruch 4, wobei der Prozess des Verwaltens umfasst:
Entkapseln des empfangenen CAN-Rahmens in einen IPMI-Rahmen;
Entnehmen der IPMI-Nachricht aus dem IPMI-Rahmen; und
Verwalten des BMC über die IPMI-Nachricht.

## Revendications

1. Système de gestion d'un contrôleur de gestion de carte de base, BMC, comprenant :
au moins un BMC ; et
au moins une carte de noeud principale, connectée audit au moins un BMC par l'intermédiaire d'un bus ; **caractérisé en ce que**
ledit bus est un bus CAN et ledit au moins un BMC et ladite au moins une carte de noeud principale sont connectés audit bus CAN en une topologie de bus, respectivement.

2. Système selon la revendication 1, dans lequel ledit au moins un BMC comprend un encapsulateur de trame CAN et un désencapsulateur de trame CAN ;
ladite au moins une carte de noeud principale comprend un encapsulateur de trame CAN et un désencapsulateur de trame CAN.

3. Système selon la revendication 1 ou 2, comprenant en outre au moins un bus CAN ;
chaque bus CAN étant connecté audit au moins un BMC et à ladite au moins une carte de noeud principale.

4. Procédé de gestion d'un contrôleur de gestion de carte de base, BMC, consistant à :
transmettre un message IPMI, Interface de gestion intelligente de plateforme, via un bus CAN entre un BMC et une carte de noeud principale, dans lequel le BMC et la carte de noeud principale sont connectés l'un à l'autre en une topologie de bus ; et
gérer le BMC sur la base du message IPMI.

5. Procédé selon la revendication 4, le processus de transmission consistant à :
encapsuler le message IPMI dans une trame IPMI, encapsuler la trame IPMI dans une trame CAN, et transmettre la trame CAN sur le bus CAN ;
vérifier les informations de noeud de destination dans la trame CAN, et déterminer s'il convient de recevoir la trame CAN, et
recevoir la trame CAN s'il est déterminé que la trame CAN doit être reçue.

6. Procédé selon la revendication 4, le processus de transmission consistant à :
déterminer un bus CAN transmettant parmi une pluralité de bus CAN ;
encapsuler le message IPMI dans une trame IPMI, encapsuler la trame IPMI dans une trame CAN, et transmettre la trame CAN sur le bus CAN transmettant ;
vérifier les informations de noeud de destination dans la trame CAN, et vérifier la trame CAN, et déterminer s'il convient de recevoir la trame CAN ; et
recevoir la trame CAN s'il est déterminé que la trame CAN doit être reçue.

7. Procédé selon la revendication 6, le processus de détermination d'un bus CAN transmettant parmi une pluralité de bus CAN consistant à :
déterminer un bus CAN maître dans un état normal en tant que bus CAN transmettant ; ou
déterminer un bus CAN en attente dans un état normal en tant que bus CAN transmettant si le bus CAN maître est anormal.

8. Procédé selon la revendication 4, le processus de gestion consistant à :
désencapsuler la trame CAN reçue en une trame IPMI ;
extraire le message IPMI de la trame IPMI ; et
gérer le BMC par l'intermédiaire du message IPMI.
